# EUROPEAN PATENT APPLICATION

(11) **EP 2 871 056 A1**
(43) Date of publication of application: **13.05.2015**
(21) Application number: 14188904.8
(22) Date of filing: 14.10.2014
(51) Int. Cl.: B32B 21/06

(54) **A MULTILAYER PANEL WALLPAPER AND MANUFACTURING METHOD THEREOF**

(30) Priority: 15.10.2013 PL 40564913
(71) Applicant: Kobylarz, Krzysztof, 33-100 Tarnow (PL)
(72) Inventor: Kobylarz, Krzysztof, 33-100 Tarnow (PL)
(74) Representative: Górsk, Anna

(57) **Abstract**

The present invention relates to a multilayer panel wallpaper (24) consisting of at least two layers, where the outer layer (11) is made of wood, in particular of a natural veneer, whereas the second, base layer (12) is made of paper, where the structure of the wood is distorted and the two layers are bound with an adhesive, in particular with an aqueous adhesive or a solvent adhesive. The object of the present invention also includes the manufacturing method of the multilayer panel wallpaper (24) with the use of wood, in particular with the use of a natural or modified veneer.

## Description

### TECHNICAL FIELD

The present invention relates to a multilayer panel wallpaper consisting of at least two layers: the outer one is made of wood, in particular of a natural veneer, whereas the base layer is made of paper, wherein the two layers are joined with an adhesive, in particular with an aqueous adhesive or a solvent adhesive. The object of the present invention also includes manufacturing method of the multilayer panel wallpaper with the use of natural wooden veneer.

In particular, the solution which is the object of the present invention concerns wallpapers which are elastic structures being a type of special paper manufactured in a multi-stage process.

### STATE OF THE PRIOR ART

The prior art knows various types of wallpapers, which are a material for covering walls and are usually made of paper, fabric, leather or plastics. Most frequently, wallpapers are made of paper with a printed or embossed pattern. Nowadays wallpapers very often feature an outer layer made of plastic, e.g. polyvinyl chloride, which makes the wallpaper resistant to damage, soiling or staining.

For instance, the Polish patent No. PL196706 B1 describes a multilayer embossed wallpaper with an embossed paper layer glued with the structural layer in which the adhesive is placed solely on the bottom side. The essential feature of this invention is the fact that the structural layer is made of an expandable material, whereas the embossed layer is made of reinforced paper material.

On the other hand, the international application No. WO2010038261 describes a thin paper with a natural veneer. The thickness of the natural veneer in this application equals 0.05-0.1 mm. Consequently, although the said application discloses a two-layer structure made from a natural veneer and base paper, the material that resulted from this did not have the features of a wallpaper because of its small thickness.

The main problem related to manufacturing a wallpaper with a thicker layer of natural veneer is the occurrence of the adverse effect of wood distortion caused by the wood fibers that absorb water. Water is absorbed both from the adhesive that was used to glue the veneer layer to the base paper, and from the adhesive that is used to apply the wallpaper onto the wall. The occurrence of this adverse affect has so far made it impossible to manufacture a wallpaper with a wooden veneer thicker than 0.4 mm.

If one considers affixing wooden veneer to a soft paper base, it is the phenomenon of distortion of the material while connecting aqueous adhesive with wood that is the obstacle to using adhesives, especially aqueous adhesives, with panel wallpapers. While making contact with water, wood becomes distorted as it gains volume, which results in the fact that during a one-sided contact with the adhesive, especially an aqueous adhesive, the natural veneer becomes distorted and rolls up alongside the wood fibers, which in turn makes it impossible or more difficult to apply the wallpaper onto the wall. Choosing a thicker and more rigid base raises the manufacturing costs and increases the weight of the panel wallpaper, which in turn, due to its thickness, results in creating a wall or floor panel that may only be applied to very flat and leveled walls.

In the light of the aforementioned prior art, the aim of the present invention was to develop a panel wallpaper whose individual layers would be joined with an adhesive, especially an aqueous adhesive, without the occurrence of the adverse effect of distorted wood caused by water absorption. Unlike when using a solvent adhesive, the advantage of using an aqueous adhesive is the possibility of limiting the evaporation of harmful substances into the environment as well as avoiding the problem of removing an unpleasant smell. Additionally, the use of an aqueous adhesive results in removing the natural deformation of the natural wooden veneer and preparing the panel without distortions for simple application onto the wall with the use of a wallpaper adhesive.

Unexpectedly, it turned out that the use of wood and paper layers of a specified thickness and the simultaneous disturbance of the outer natural veneer layer structure by appropriately bending at least two layers bound with an adhesive results in achieving a lasting change of the properties of the multilayer panel wallpaper, which no longer distorts in a way that would make it unfit for application onto the walls with the adhesive - a phenomenon that used to occur during the previous attempts.

### DETAILED DESCRIPTION OF THE INVENTION

The object of the present invention is a multilayer panel wallpaper whose layers are bound with an adhesive, in particular with an aqueous or solvent adhesive characterized in that it consists of at least two layers: the outer layer being wood 0.4-1.0 mm and the second, base layer being paper 0.6-2.0 mm thick, where the structure of wood is distorted.

Preferably, the distortion in the structure of wood results from breaking and/or bending, and the thicker the individual layers of the panel wallpaper are, the stronger bending is required.

Preferably, the wood used to create the outer layer is a natural veneer and/or a modified veneer. It is also preferable when the cellulose fibers in the paper that is used to manufacture the paper base layer run perpendicularly to the fibers of the (wooden) outer layer.

The use of paper characterized by a specific direction of cellulose fibers resulted in an additional positive effect that appears in the solution featured in the present invention. Namely, the use of this type of base paper results in reducing the tendencies for the wooden layer to stretch, and the use of cardboard with a specific direction of cellulose fibers results in balancing the forces that appear as a consequence of the humidity between the natural veneer and the paper base. This way the unfavorable bend of the natural veneer is reduced.

Preferably, an additional hardly water-permeable layer and an additional paper layer 0.05-0.5 mm thick are added to the base side of the paper layer, provided that the thickness of the base layer together with the additional layer does not exceed 2 mm. This is how the beneficial effect of strengthening the base is achieved, and the enamel causes the base to be bent in the appropriate direction. An especially preferable effect is achieved when the layer that is hardly water-permeable is made of solvent or aqueous paint and/or varnish, especially an acrylic enamel.

Using an additional layer that is hardly water-permeable with the base layer of the panel wallpaper in accordance with the present invention resulted in an additional, unexpected effect of improving the functional characteristics of the wallpaper, which is easier to apply onto the walls. In case when a two-layer wallpaper, without additional layers, is applied onto the wall, an aqueous wallpaper adhesive is spread over the wallpaper, which results in the paper expanding and the reoccurrence of the force expanding the cardboard from the disadvantageous side - the paper base expands, whereas the other side of the base with natural veneer stays intact, which results in the wallpaper warping disadvantageously making the application of the wallpaper onto the walls more difficult. By adding the layer that is hardly water-permeable this adverse effect can be eliminated.

The object of the present invention is also the manufacturing method of the panel wallpaper characteristic in that after binding together of at least two layers of the panel wallpaper, namely the wooden outer layer and the paper base layer, the structure of the wooden outer layer is distorted in the direction which is parallel to the direction of the natural fibers of wood.

This method of distortion results in a desired bend, while simultaneously not affecting the visual features of the product, i.e. it causes no visible damage to the wood surface or to the veneer layers and does not affect the product quality. The distortion must be carried out within a bending range that does not to damage the cardboard structure to the point of the so called de-layering of the paper base layers, which would disqualify the product as faulty. Thanks to the distortion of the structure of wood, the internal forces of wood cease to act and the paper base can be formed into the desired panel shape. The distortion of the structure of wood may be carried out in a number of ways, including manually and by a machine.

Preferably, the distortion of the structure of wood results from breaking or bending. It is especially preferable if bending with the use of a set of rollers is carried out with a bending radius set to no more than 14.5 cm, and in case of bending at the edge - at a bending angle of more than 10

Preferably, if the pressing is carried out at the temperature within the range of 40-200 °C, and the panels are then pressed at the pressure of 50-200 kg/cm².

As a result of applying temperature and pressure, the base is instantly bound to the veneer, the water quickly evaporates from the adhesive, which shortens the drying time, prevents excessive moistening of the finished element and causes the initial removal of the veneer warping. Using higher temperature while the pressure is being applied shortens the process.

Preferably, during the process of drying, the elements of the panel wallpaper embodying the present invention are laid with their surface parallel to the ground, with the support point in the central part and the wooden outer layer is the layer on top.

This manner of drying makes it possible to benefit from the natural phenomenon of gravity that helps counterbalance the expanding force of the wooden veneer on the adhesive side. The panel wallpaper embodying the present invention may be dried in order to achieve the proper binding of the adhesive and/or manually or machine-painted with various agents for wood treatment, including varnishes, wood stains, wood paints, varnish stains. The binding of the natural veneer with the paper base makes it possible to bend the wallpaper manufactured in this manner, because if the natural veneer layer was bent separately, it could result in it being damaged or broken-off.

The object of the present invention is presented on the examples of manufacturing and on the enclosed picture, however not limiting the scope of the application, which:
- Fig. 1: illustrates the schematic relative alignment of the fibers of the wooden layer and the fibers of the paper base layer;
- Fig. 2: illustrates the stage of the panel wallpaper manufacturing process in accordance with the present invention, during which the structure of wood is being distorted while being moved between a system of rollers wherein the cellulose fibers of the wooden layer are laid parallel to the direction of bending by the set of rollers;
- Fig. 3: illustrates the cross-section of the machine used for bending the panel wallpaper in accordance with the present invention with the rollers located in such a way that the bending radius is equal to 14.5 cm;
- Fig. 4: illustrates the cross-section of the machine used for bending the panel wallpaper embodying the present invention with the rollers located in such a way that the bending radius is equal to 8.5 cm;
- Fig. 5: illustrates the cross-section of the machine used for bending the panel wallpaper embodying the present invention with the rollers located in such a way that the bending radius is equal to 4.5 cm;
- Fig. 6: illustrates the cross-section of the sheet of the panel wallpaper in accordance with the present invention during the drying process.

### EXAMPLES

### Bending the multilayer panel wallpaper

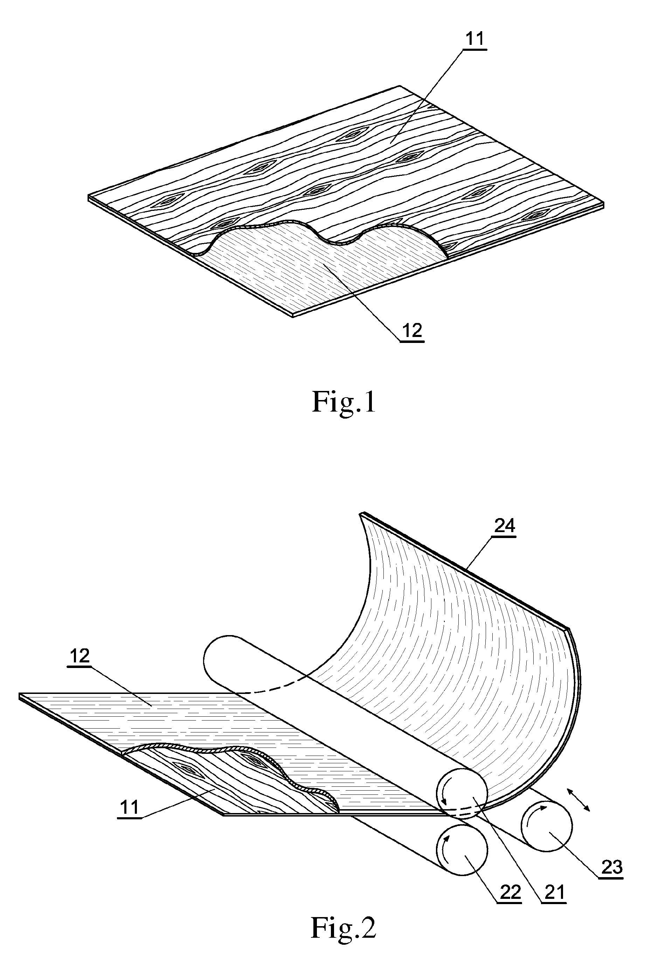

Trials were performed in order to establish the optimal parameters of each of the layers of the panel wallpaper 24 in accordance with the present invention. They included tests with the use of wood in the form of a natural veneer 0.6 mm thick as the outer layer 11, and paper in the base layer 12. The outer layer 11 made of wood in the form of sewn natural veneer panels measuring 70 cm by 50 cm was glued to the appropriately sized paper base layer 12 that was 1.2 mm and 0.5 mm thick. The direction of the fibers of the natural veneer in the outer layer 11 is perpendicular to the direction of the fibers in the paper base layer 12 (Fig. 1). An aqueous adhesive on the basis of the water dispersion of polyvinyl acetate (polyvinyl acetate, FOLCO^{®} LIT D3 TC, FOLLMANN&CO) was used to bind the layers of the wallpaper together. The panel wallpaper 24 was bent in two manners:
a) by using a system of three rollers, two of which - preliminary rollers 21, 22 - exact pressure on the paper/panel, and the bending radius can be regulated by adjusting the position of the movable roller 23 (Fig. 2), while the direction of the bend is parallel to the direction of the cellulose fibers in the wooden outer layer (11);
b) edge bending with the use of a press brake.
The bending results in the distortion of the structure of wood parallel to the natural fibers of wood, which causes a favorable bending of the panel wallpaper 24 in accordance with the present invention, while not causing the visual deformation of the product, (there is no visible damage to the wood surface or to the veneer layers and it does not affect the product quality). The natural tension between the fibers is weakened and the forces that would warp the panel in a undesirable direction cease to act.

Table 1a presents the results of the tests that were carried out for various thicknesses of the wallpaper layers that are the object of the present invention, and for various types of bending.

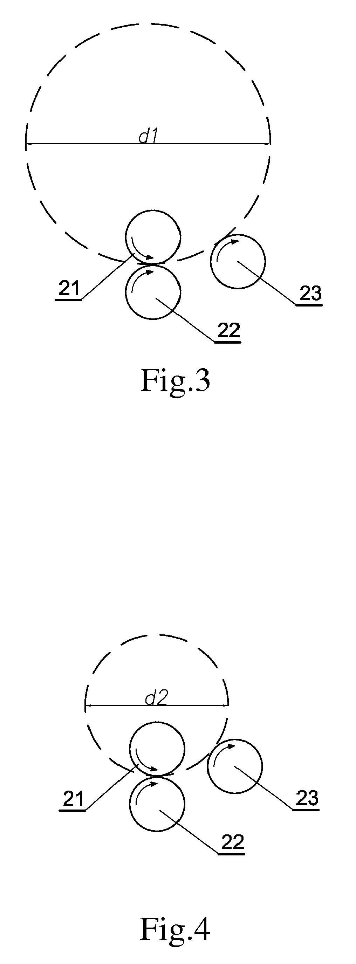

The results of the tests in the case of bending with rollers indicate that for the wooden outer layer 11 in the form of natural veneer 0.6 mm thick and the paper base layer 12 which was 1.2 mm thick the best bending radius is within the range 4.5-8.5 cm (Fig. 4, where the bending radius d₂/2 equals 8.5 cm). The desired effect was also achieved when the bending radius was equal to 14.5 cm, however, after 10 days a slight warping occurred, which could cause problems with storage of the finished product prepared in such a way. It was estimated that the maximal length of the bending radius is d₁/2 equal to 14.5 cm (Fig. 3).

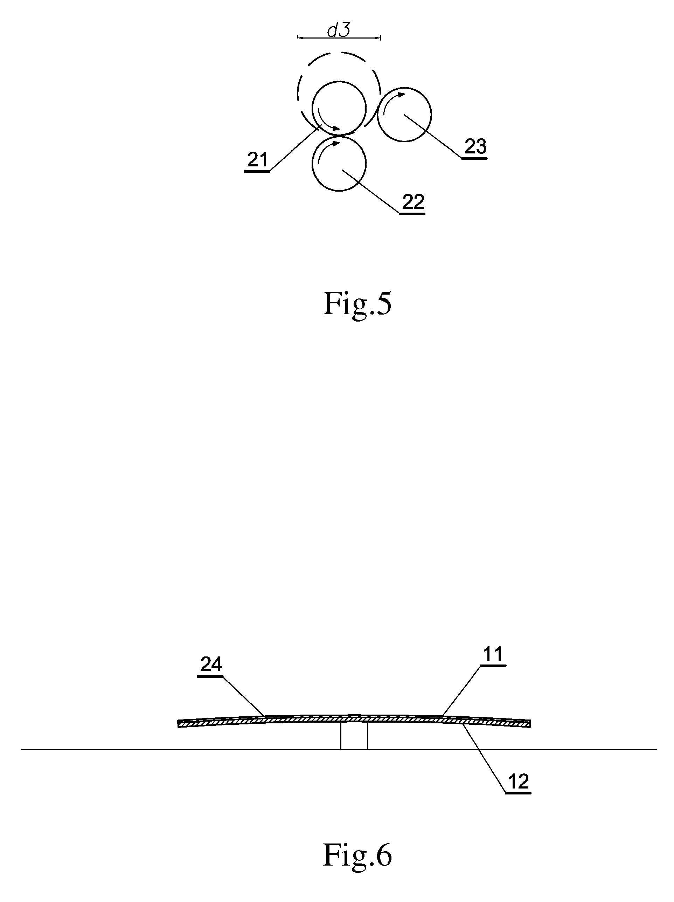

On the other hand, when the bending radius was 4.5 cm, there was a clearly visible distortion of the structure of wood and the structure of the paper base, and the panel was bent so strongly that it caused problems on the subsequent stages of processing (painting, cutting). When the glued together 0.6 mm thick natural veneer and the 1.2 mm thick paper were edge bent, the most favorable range of bending angles in relation to the surface of the wallpaper was 10-40°. In view of the results achieved when the bending radius d₃/2 was 4.5 cm (Fig. 5) it was established that the minimal bending radius is equal to 5 cm.

**Table 1a. Test results for two types of bending: along the radius (ARB, length of the circle radius) and edge bending with the use of a press brake (EB, value given in degrees, distance between lines of bending equal to 1 cm)**

| *Layers* | *Base Layer Type* | *Bending Type* | *Result of bending*/*breaking* |
|---|---|---|---|
| Natural veneer (oak): 0.6 mm Paper: 1.2 mm | High bulk cardboard, very good characteristics of the base, natural veneer without deformations, optimal flexibility onto apply on walls with slight irregularities | ARB, 14.5 cm | the distortion of the structure of wood and the paper base is too weak. Problems with storage, possibility of unfavorable warping |
| | | ARB, 8.5 cm | very good distortion of the structure of wood and the paper base; no issues with storage. No damage to the base |
| | | ARB, 5 cm | very good distortion of the structure of wood and the paper base; no issues with storage. No damage to the base. Significant bending, it is recommended the wallpaper be put under pressure in a "flat" position in order to continue the processing |
| | | EB, >40 | the distortion of the structure of wood and the paper base is too strong; visible damage to the structure of wood and the base |
| | | EB, 10-40° | the distortion of the structure of wood and the paper base is optimal in order to achieve the desired effect |
| | | EB, <10° | the distortion of the structure of wood and the paper base is too weak |

Table 1b presents the results of the bending tests for panel wallpaper 24 made from a wooden outer layer 11 in the form of a natural veneer that is 0.6 mm thick and the other base layer 12 in the form of paper that is 0.5 mm thick. In this case the best bending radius was in the range of 4.5-6 mm, which resulted in achieving the desired distortion of the structure of wood. In this case the paper base layer 12 is of low rigidity and it does not counterbalance the stretching caused by the water contained in the adhesive, while also not being able to remove the natural deformation of the veneer.

**Table 1b. Test results for two types of bending: along the radius (ARB, length of the circle radius) and edge bending with the use of a press brake (EB, value given in degrees, distance between lines of bending equal to 1 cm)**

| *Layers* | *Base Layer Type* | *Bending Type* | *Result of bending*/*breaking* |
|---|---|---|---|
| Natural veneer (oak); 0.6 mm Paper: 0.5 mm | the base is too thin, the rigidity is too small, it does not counterbalance the force of bending the natural veneer, it does not remove the natural deformation of the natural veneer | ARB, 14.5 cm | the distortion of the structure of wood and the paper base is too weak; the paper base is not rigid enough; it does not counterbalance the stretching of wood caused by water contained in the adhesive; visible deformation at the joining point of the sown natural veneer |
| | | ARB, 8.5 cm | the distortion of the structure of wood and the paper base is good, but the paper base is not rigid enough; it does not counterbalance the stretching of wood caused by water contained in the adhesive; visible deformation of the wooden natural veneer |
| | | ARB, 5 cm | |
| | | EB, >40 | the distortion of the structure of wood and the paper base is good; the paper base is not rigid enough; it does not counterbalance the stretching of wood caused by water contained in the adhesive; visible deformation of the wooden natural veneer |
| | | EB, 10-40° | |
| | | EB, <10 | the distortion of the structure of wood and the paper base is too weak; the paper base is not rigid enough; it does not counterbalance the stretching of wood caused by water contained in the adhesive; visible deformation of the wooden natural veneer |

Additional tests were also carried out for the case when a pine natural veneer was used in the outer layer 11 which was 1.0 mm thick along with a 2.00 mm thick paper layer in the base layer 12 (Table 2). As a result of the tests that were carried out it can be stated that using natural veneer 1.0 mm thick causes the increase of the radius of the bending circle.

**Table 2. Results of tests for bending along the radius carried out for natural veneer 1 mm thick and base layer 2.0 mm thick**

| *Natural Veneer Thickness* | *Base Thickness* | *Radius of the Bending Circle* | *Observed Result* |
|---|---|---|---|
| 1.0 mm (pine) | 2.0 mm | 17.5 cm | The bend is appropriate, but the panel is too rigid. Possible application solely for very flat surfaces, there could be difficulties in applying the wallpaper due to the spring-like characteristics stemming from the rigidness of the material; no issues with storage. |
| 1.0 mm (pine) | 2.0 mm | 14.5 cm | The bend is too big, the panel is too rigid and its bend disqualifies it from being ready for application, bending in the opposite direction could be applied, but the effect of rigidness, which could result in difficulties during the application onto the walls, persists; no issues with storage. |

### The manufacturing method of the panel wallpaper

The panel wallpaper embodying the present invention was manufactured by binding a wooden outer layer 11 with a paper base layer 12 with the use of an aqueous adhesive (polyvinyl acetate, FOLCO^{®} LIT D3 TC, FOLLMANN&CO).

In order to additionally improve the effect of binding with an adhesive, a heat treatment test with the application of physical pressure was carried out within the temperature range of 40-200°C. Table 3 presents the results obtained for a two-layer wallpaper consisting of wood in the form of a veneer which was 0.6 mm and 1 mm thick and a paper layer that was 1.2 mm and 1.6 mm thick being heat treated in various temperatures.

**Table 3. Observed results while compressing bound layers of the panel wallpaper depending on the temperature and thickness of the individual layers.**

| *Temp.* | *Base Thickness* | *Veneer Thickness* | *Observed Result* |
|---|---|---|---|
| 18C | 1.2 mm | 0.6 mm | initial binding of layers, the adhesive permeates the paper base, the veneer undergoes increased natural deformation, longer compression time in the press and longer drying time |
| 40°C | 1.2 mm | 0.6 mm | initial binding of layers, the adhesive slightly cured, still permeates the paper base, no increased deformation, longer compression time in the press and longer drying time |
| 60°C | 1.2 mm | 0.6 mm | initial binding of layers, the adhesive is cured, small degree of permeability into the paper base, slight removal of the deformation, shorter compression and drying time |
| >80°C | 1.2 mm | 0.6 mm | initial binding of layers, the adhesive is cured, does not permeate the paper base, slight removal of the deformation |
| 18C | 1.6 mm | 1.0 mm | initial binding of layers, the adhesive permeates the paper base, the veneer undergoes increased natural deformation, longer compression time in the press and longer drying time |
| 40°C | 1.6 mm | 1.0 mm | initial binding of layers, the adhesive is weakly cured, still permeates the paper base, slightly increased deformation, longer compression and drying time |
| 60°C | 1.6 mm | 1.0 mm | initial binding of layers, the adhesive is slightly cured, moderate degree of permeability into the paper base, slight removal of the deformation, shorter compression and drying time |
| >80°C | 1.6 mm | 1.0 mm | initial binding of layers, the adhesive is cured, does not permeate the paper base, slight removal of the deformation |

The above results indicate that the higher temperature is applied during the compression, the more cured the adhesive between the layers is and the process may last shorter. Similar results were achieved for different thicknesses of the panel wallpaper layers, however the thicker the layers are, the higher the temperature or the longer the drying time for the wallpaper under compression. A base that was 1.2 mm and 1.6 mm thick was used in the tests.

In order to finally bind wood with paper and remove the remaining deformations of the natural veneer, the panels are put into a hot press and a pressure within the range of 50-200 kg/cm2 is applied. The greater the applied compression force, the shorter the required compression time.

The force and the pressure application time must be the same for all panels because in case of a base prone to water permeability compression occurs which results in the fact that later the thickness of panels may slightly differ. Drying in a hot press at an increased temperature without compression may lead to de-layering of the veneer and the base due to the impact of various factors, including, but not limited to, paints and varnishes.

### Additional hardly water-permeable layer

In order to make the panel wallpaper more easily applicable onto walls, an additional layer was added to a two-layer wallpaper, as presented in Example 1. This additional layer is hardly water-permeable and is made up of a thin layer of acrylic enamel (Supermal, acrylic enamel, manufacturer: Śnieżka) to which paper was later bound with an adhesive. The acrylic enamel after curing becomes a waterproof layer, but an additional layer of paper 0.05 and 0.5 mm thick was bound to it with an aqueous adhesive, with the total thickness of this layer not exceeding 2 mm.

As a result the effect of reducing the water-permeability was achieved, while simultaneously preserving vapor permeability - to provide for the breathing of walls. Moreover, the use of the additional paper layer results in a better bonding with the wall surface using a wallpaper adhesive. It was noticed that a panel without a hardly permeable layer, within 5 minutes after wallpaper adhesive was spread on it undergoes deformation in an unfavorable direction, which makes it more difficult to apply the finished panel onto walls, whereas a panel with a thin layer of acrylic enamel and the additional paper layer - both 0.05 mm and 0.5 mm thick - undergoes no deformation. It takes approximately 10-15 minutes for the wallpaper adhesive that was used on the panel to dry.

### Further treatment of the panel wallpaper

In order to achieve an additional positive effect of bending a drying process was carried out with the use of gravity. Adhesive-bound elements of the panel wallpaper 24 were laid on shelves consisting of two rods positioned 10 cm from each other in such a way that the centre of the panel rested on the rods and the sides of the panels were lying freely (Fig. 6), wherein the wooden outer layer 11 was the top layer. The drying process took 8 hours, after which the panels - depending on their intended purpose - underwent further treatment, including painting, varnishing and cutting.

This manner of drying was used after carrying out prior tests when the drying process was carried out on flat surfaces, e.g. on hot press shelves, where it sometimes occurred that the elements that rested on a flat surface got deformed in an unfavorable direction, especially near the edges of the panel.

## Claims

1. The multilayer panel wallpaper whose layers are bound with an adhesive, in particular an aqueous or solvent adhesive, **characterized in that** it consists of at least two layers the outer layer (11) being wood 0.4-1.0 mm thick and the second, base layer (12) being paper 0.6-2.0 mm thick, where the structure of wood is distorted.

2. The panel wallpaper according to Claim 1, **characterized in that** the distortion in the structure of wood results from breaking and/or bending, and the thicker the individual layers of the panel wallpaper (24) are, the greater bending radius is required.

3. The panel wallpaper according to Claims 1 and 2, **characterized in that** the wood of which the outer layer (11) is made of a natural veneer and/or a modified veneer.

4. The panel wallpaper according to any of Claims 1 to 3, **characterized in that** the direction of the cellulose fibers in the base layer (12) is perpendicular to the direction of the fibers in the outer layer (11).

5. The panel wallpaper according to any of Claims 1 to 4, **characterized in that** from the side of the paper base layer (12) an additional, hardly water-permeable layer and an additional paper layer 0.05-0.5 mm thick are added, where the thickness of the base layer together with the additional layer does not exceed 2 mm.

6. The panel wallpaper according to Claim 5, **characterized in that** the hardly water-permeable layer is made of a solvent or aqueous paint and/or varnish.

7. The panel wallpaper according to Claim 6, **characterized in that** the hardly water-permeable layer is made of acrylic enamel.

8. The manufacturing method of the panel wallpaper according to any of Claims 1 to 7, **characterized in that** after binding together of at least two layers of the panel wallpaper (24), namely the wooden outer layer (11) and the paper base layer (12), the structure of the wooden outer layer (11) is distorted in the direction which is parallel to the direction of the natural fibers of wood.

9. The manufacturing method according to Claim 8, **characterized in that** the distortion of the structure of wood is achieved by breaking or bending.

10. The manufacturing method according to Claim 9, **characterized in that** the bending with the use of a set of rollers (21, 22, 23) is carried out with a bending radius set to no more than 14.5 cm.

11. The manufacturing method according to Claim 9, **characterized in that** the bending at the edges is carried out at a bending angle of more than 10 .

12. The manufacturing method according to Claim 12, **characterized in that** the pressing is carried out at a temperature within the range of 40-200 , and then a physical pressure is applied with the force of 50-200 kg/cm².

13. The manufacturing method according to any of Claims 8 to 13, **characterized in that** the final stage is the drying, where the panel wallpaper (24) is laid parallel to the surface with the supporting point in its central part, where the wooden outer layer (11) is the layer on top.
